(19) Europäisches Patentamt
European Patent Office
Office européen des brevets

(11) Veröffentlichungsnummer: **0 232 225**
**A2**

(12) # EUROPÄISCHE PATENTANMELDUNG

(21) Anmeldenummer: **87810053.6**

(22) Anmeldetag: **28.01.87**

(51) Int.Cl.[3]: **C 08 G 59/56**
C 08 L 63/00, C 08 L 9/02

(30) Priorität: **03.02.86 JP 20156/86**

(43) Veröffentlichungstag der Anmeldung:
**12.08.87 Patentblatt 87/33**

(84) Benannte Vertragsstaaten:
**AT CH DE ES FR GB IT LI NL SE**

(71) Anmelder: **CIBA-GEIGY AG**
**Klybeckstrasse 141**
**CH-4002 Basel(CH)**

(72) Erfinder: **Sagawa, Hirotoshi**
**5-3-901, Minamimukonoso 10-chome**
**Amagasaki-shi Hyogo(JP)**

(72) Erfinder: **Yamaguchi, Seiji**
**10-5, Komyocho**
**Takarazuka-shi Hyogo(JP)**

(54) **Epoxidharz-Zusammensetzung.**

(57) Epoxidharz-Zusammensetzung enthaltend
(a) 100 Gew.-Teile eines Epoxidharzes,
(b) 1 - 20 Gew.-Teile eines Acryloligomers,
(c) 5 - 150 Gew.-Teile eines Amins und
(d) 10 - 200 Gew.-Teile eines aminterminierten Nitrilkautschuks.

Solche Gemische eignen sich zur Herstellung von Klebstoffen, Ueberzügen, Isolationsmaterial in der Elektroindustrie.

EP 0 232 225 A2

Croydon Printing Company Ltd.

CIBA-GEIGY AG
Basel (Schweiz)

3-15618/=/CGJ 24

# Epoxidharz-Zusammensetzung

Die vorliegende Erfindung betrifft eine Epoxidharzzusammensetzung, welche schnellhärtend ist, dem gehärteten Gegenstand hohe Schlagzähigkeit verleiht, hohe Abreissfestigkeit, ausgezeichnete thermische Eigenschaften und ausgezeichnete Wasserfestigkeit besitzt.

Aufgrund der guten thermischen Eigenschaften, Beständigkeit und Rostsicherheit werden Epoxidharze in vielen Gebieten eingesetzt, so als Kleber, Oberflächenschutz etc. Als Kleber erfüllen bisherige Systeme jedoch bezüglich Schlagzähigkeit und Abreissfestigkeit nicht die hohen Anforderungen, welche an solche Klebstoffe gestellt werden.

Eine erste Klasse solcher bekannter Epoxidharze enthält ein Epoxidharz und ein niedermolekulares aliphatisches Amin oder Mercaptan, um neben hoher Scherfestigkeit und Härtungsgeschwindigkeit auch hohe Hitzebeständigket und Dauerhaftigkeit zu erreichen. (s. "New Epoxy Resins", herausgegeben von Shoukohdo, S. 167, 251 und 566 (1985). Eine zweite Klasse enthält ein Epoxidharz und ein Amin, sowie ein oligomeres Acrylat, um hohe Härtungsgeschwindigkeit zu erreichen (s. "Oligomer Handbook", herausgegeben von Kagaka Kogyo Nippo-Sha, S. 256 (1977). Die dritte Klasse enthält ein Epoxidharz, ein Amin und einen Nitrilkautschuk mit Amin-Endgruppen (s. C.K. Riew, "Rubber Chemistry & Technology", Vol. 54, No. 2., (1981)).

Die bekannten Systeme haben aber verschiedene Nachteile. So ist die erste Klasse an Zusammensetzungen aufgrund der hohen Vernetzungsdichte eher spröde und erfüllt bezüglich Haftung und Schlagzähigkeit die Anforderungen nur teilweise. Ausserdem sind die Vernetzungsmittel flüchtig, was zu verminderter Stabilität führt, und die Mercaptane riechen unangenehm. In der zweiten Klasse werden trotz hoher Vernetzungsgeschwindigkeit keine hohen Vernetzungsdichten erreicht, was wiederum zu unbefriedigender Haftung und Schlagzähigkeit führt. Dank dem aminoendgruppenhaltigen Nitrilkautschuk werden mit der dritten oben genannten Klasse zwar die Haftung und Schlagzähigkeit verbessert, jedoch läuft die Vernetzungsreaktion nur sehr langsam und glatt ab.

Aufgabe der vorliegenden Erfindung war es daher, ein schnellhärtendes Epoxidharzsytem zu finden, welches Produkte mit hoher Schlagzähigkeit, grosser Haftung, Hitzebeständigkeit und Beständigkeit gegen heisses Wasser liefert.

Die vorliegende Erfindung betrifft eine Epoxidharz-Zusammensetzung enthaltend

(a) 100 Gew.-Teile eines Epoxidharzes,
(b) 1 - 20 Gew.-Teile eines Acryloligomers,
(c) 5 - 150 Gew.-Teile eines Amins und
(d) 10 - 200 Gew.-Teile eines aminterminierten Nitrilkautschuks

Als Epoxidharz (a), das in dem härtbaren Gemisch eingesetzt werden kann, eignen sich alle Typen von Epoxidharzen, wie beispielsweise solche, die direkt an Sauerstoff-, Stickstoff- oder Schwefelatome gebundene Gruppen der Formel I

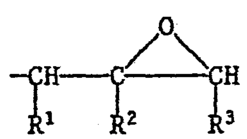 (I),

worin entweder $R^1$ und $R^3$ je ein Wasserstoffatom darstellen, in welchem Fall $R^2$ dann ein Wasserstoffatom oder eine Methylgruppe bedeutet, oder $R^1$ und $R^3$ zusammen $-CH_2CH_2-$ darstellen, in welchem Fall $R^2$ dann ein Wasserstoffatom bedeutet, enthalten.

Als Beispiele solcher Harze seien Polyglycidyl- und Poly(β-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, und aromatischen Polycarbonsäuren, wie Phthalsäure, Isophthalsäure und Terephthalsäure, ableiten.

Weitere Beispiele sind Polyglycidyl- und Poly-(β-methylglycidyl)-äther, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Aether lassen sich mit Poly-(epichlorhydrin) aus acyclischen Alkoholen, wie Aethylenglykol, Diäthylenglykol und höheren Poly-(oxyäthylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-2,4,6-triol, Glycerin, 1,1,1-Trimethylolpropan, Pentaerythrit und Sorbit, aus cycloaliphatischen Alkoholen, wie 1,3- und 1,4-Cyclohexandiol, Bis-(4-hydroxycyclohexyl)-methan, 2,2-Bis-(4-hydroxycyclohexyl)-propan und 1,1-Bis-(hydroxymethyl)-cyclohexen-3, und aus Alkoholen mit aromatischen Kernen, wie N,N-Bis-(2-hydroxyäthyl)-anilin und p,p'-Bis-(2-hydroxyäthylamino)-diphenylmethan, herstellen. Man kann sie ferner aus einkernigen Phenolen, wie Resorcin und Hydrochinon, sowie mehrkernigen Phenolen, wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (sonst als Bisphenol A bekannt) und 2,2-Bis-(3,5-dibrom-4-hydroxyphenyl)-propan, sowie aus Aldehyden, wie Formaldehyd, Acetaldehyd, Chloral und Furfurol, mit Phenolen,

wie Phenol selbst und durch Chloratome oder Alkylgruppen mit jeweils bis zu neun Kohlenstoffatomen ringsubstituiertem Phenol, wie 4-Chlorphenol, 2-Methylphenol und 4-tert.-Butylphenol, gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen wie Anilin, n-Butylamin, Bis-(4-aminophenyl)-methan und Bis-(4-methylaminophenyl)-methan, erhalten werden, Triglycidylisocyanurat sowie N,N'-Diglycidylderivate von cyclischen Alkylenharnstoffen wie Aethylenharnstoff und 1,3-Propylenharnstoff, und Hydantoinen, wie 5,5-Dimethylhydantoin.

Poly-(S-glycidyl)-verbindungen sind zum Beispiel die Di-S-glycidylderivate von Dithiolen, wie Aethan-1,2-dithiol und Bis-(4-mercaptomethylphenyl)-äther.

Beispiele für Epoxidharze mit Gruppen der Formel I, worin $R^1$ und $R^3$ zusammen eine $-CH_2CH_2-$Gruppe bedeuten, sind Bis-(2,3-epoxycyclopentyl)-äther, 2,3-Epoxycyclopentyl-glycidyläther und 1,2-Bis-(2,3-epoxycyclopentyloxy)-äthan.

In Betracht kommen auch Epoxidharze, in welchen die 1,2-Epoxidgruppen an Heteroatome verschiedener Art gebunden sind, z.B. das N,N,O-Triglycidylderivat des 4-Aminophenols, der Glycidyläther/Glycidylester der Salicylsäure oder p-Hydroxybenzoesäure, N-Glycidyl-N'-(2-glycidyloxypropyl)-5,5-dimethylhydantoin und 2-Glycidyloxy-1,3-bis-(5,5-dimethyl-1-glycidylhydantoinyl-3)-propan, oder solche, die durch Adduktbildung einer niedermolekularen Epoxidverbindung mit einem carboxyl- oder hydroxylterminierten Polymeren, wie beispielsweise Polyester oder Butadien-Acrylnitrilkautschuk, erhalten werden.

Gewünschtenfalls kann man als Epoxidverbindung (a) Gemische verschiedener Epoxidharze einsetzen.

Bevorzugte Komponenten (b) sind insbesondere Acrylester enthaltend mindestens eine Gruppe der Formel

$$CH_2=C(R^4)-CO-O-$$

worin $R^4$ Wasserstoff, Methyl oder Ethyl bedeutet.

Geeignete Ester mit mindestens einer Gruppe der Formel I basieren insbesondere auf Acrylsäure oder Methacrylsäure und leiten sich ab von aliphatischen, cycloaliphatischen, alicycloaliphatischen, araliphatischen oder heterocyclisch-aliphatischen (poly)valenten Alkoholen, von (Poly)hydroxycarbonsäuren, von (Poly)hydroxyalkylaminen, oder von (Poly)hydroxyalkylnitrilen.

Daneben können auch Acrylsäureesterurethane, -ureide oder Acrylamide verwendet werden. Diese Verbindungen sind in der Regel kommerziell erhältlich oder können nach an sich bekannten Methoden erhalten werden.

Beispiele für Acrylester sind:

Polyethylenglykoldimethacrylate (PEGDMA), wie Ethylenglykoldimethacrylat, Diethylenglykoldimethacrylat, Diethylenglykoldiacrylat, Tetraethylenglykoldimethacrylat (4-EGDMA), oder Trimethylolpropantrimethacrylat (TRIM), Pentaerythrittetramethacrylat, Dimethacrylatbis-(ethylenglykol)-phthalat, 2-Hydroxyethylmethacrylat (HEMA), 3-Hydroxypropylmethacrylat (HPMA), das Reaktionsprodukt aus Tolylenisocyanat und 2-Hydroxyethylmethacrylat, sowie Methylmethacrylat, Butylmethacrylat, Glycidylmethacrylat (GMA), Methacrylsäure-2-acetoacetoxyethylester (AAEMA), Tetrahydrofurfurylmethacrylat oder Dicyclopentenyloxyethylmethacyrylat, und besonders bevorzugt Dipentaerithritolpentacrylat, Dipentaerithritolhexacrylat oder Acrylate der Formel

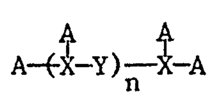

wobei A Acryloyl bedeutet, X sich von einem mehrwertigen Alkohol und Y sich von einer mehrbasischen Säure ableitet und n 0 - 3 ist. Ein Beispiel solcher Verbindungen ist Aronix®M-8030.

Bevorzugte Acrylate sind polyfunktionell, da sie für den Aufbau einer dreidimensionalen Struktur dienen. Bei den Acryloligomeren handelt es sich um Verbindungen, welche als Monomere bis Pentamere bezeichnet werden können, vorzugsweise sind es Monomere oder Dimere.

Werden weniger als 1 Gew.-Teil der Komponente (b) eingesetzt, ist die Härtungsgeschwindigkeit zu klein, beim Einsatz von mehr als 20 Gew.-Teilen ist diese unkontrollierbar und führt zu unbrauchbaren Produkten. Bevorzugt werden daher 2 - 15 Gew.-Teile der Komponente (b) eingesetzt.

Als Amin (c) können den erfindungsgemässen Gemischen die gebräuchlichen aminischen Härtungsmittel für Epoxidharze zugesetzt werden, wie beispielsweise die aliphatischen, cycloaliphatischen, aromatischen und heterocyclischen Amine, wie m- und p-Phenylendiamin, Bis-(4-aminophenyl)-methan, Anilin-Formaldehyd-Harz, Bis-(4-aminophenyl)-sulfon, Aethylendiamin, Propan-1,2-diamin, Propan-1,3-diamin, N,N-Diäthyläthylendiamin, Hexamethylendiamin, Diäthylentriamin, Triäthylentetramin, Tetraäthylenpentamin, N-(2-Hydroxyäthyl)-, N-(2-Hydroxypropyl)-, und N-(2-Cyanoäthyl)-diäthylentriamin, 2,2,4-Trimethylhexan-1,6-diamin, 2,3,3-Trimethylhexan-1,6-diamin, m-Xylylendiamin, N,N-Dimethyl- und N,N-Diäthylpropan-1,3-diamin, Aethanolamin, Bis-(4-aminocyclohexyl)-methan, 2,2-Bis-(4-aminocyclohexyl)-propan, 2,2-Bis-(4-amino-3-methylcyclohexyl)-propan, 3-Aminomethyl-3,5,5-trimethylcyclohexylamin (Isophorondiamin), und N-(2-Aminoäthyl)-piperazin. Besonders geeignet sind ferner Polyamidamine, etwa solche der Formel $H_2N-R'-NH(OC-R-CONH-R'-NH)_m-H$, wobei R und R' für Alkylen stehen.

Werden weniger als 5 Gew.-Teile Komponente (c) zugesetzt, so verläuft die Härtung zu langsam, beim Einsatz von mehr als 150 Gew.-Teilen ergeben sich Schwierigkeiten bei der Vernetzung. Bevorzugt

wird die Komponente (c) in einer Menge von 10 - 120 Gew.-Teilen eingesetzt.

Die Wahl des Nitrilkautschuks ist nicht kritisch, solange er endständige Aminogruppen besitzt.

Solche Polymere sind im Handel erhältlich, so z.B. unter dem Namen HYCAR® der Fa. Goodrich, (HYCAR® ATNB mit einem Aminequivalent von 900 oder 1200). Andere Beispiele für Komponente (d) sind H-3932 und X 3995 (beides Handelsprodukte der Fa. ACR, Tokyo mit einer Viskosität von 8000 bzw. 4500 cps (25°C).

Typische Beispiele dafür leiten sich von Butadien-acrylonitril-Kautschuken ab.

Werden weniger als 10 Gew.-Teile der Komponente (d) eingesetzt, so ist die Schlagzähigkeit des gehärteten Produkts ungenügend, beim Einsatz von mehr als 200 Gew.-Teilen wird das Produkt zu weich. Bevorzugt werden 20 - 150 Gew.-Teile der Komponente (d) verwendet.

Bevorzugt werden von den Komponenten (c) und (d) zusammen 50 - 230 Gew.-Teile eingesetzt, weil sonst die Vernetzung nicht reibungslos abläuft. Das Gewichtsverhältnis von (c) zu (d) beträgt bevorzugt 3:1 bis 1:7. Ausserhalb dieses Verhältnisses besitzt das gehärtete Produkt ungenügende Flexibilität und Haftungseigenschaften.

Selbstverständlich können die härtbaren Gemische der vorliegenden Erfindung auch übliche Zusätze enthalten, wie Pigmente, Weichmacher (z.B. Phthalsäureester), Thixotropiemittel (z.B. Aerosil®, Russ, Füllstoffe wie Talk, Calciumcarbonat und andere Stoffe mehr).

Die Herstellung der härtbaren Gemische der vorliegenden Erfindung erfolgt mittels bekannter physikalischer Mischmethoden, z.B. durch separates inniges Vermischen gegebenenfalls unter Vacuum der Komponenten (a) und (b) bzw. (c) und (d), z.B. in einem Kneter bei Raumtemperatur und anschliessendem Mischen mittels eines Glasstabs.

Die härtbaren Gemische der vorliegenden Erfindung werden vorzugsweise überall dort eingesetzt, wo es auf hohe Flexibilität und Hitzebeständigkeit ankommt, z.B. als Klebstoffe, Ueberzüge, Isoliermaterial in der Elektroindustrie, usw.

Beispiele 1 - 3

Die in der untenstehenden Tabelle angegebenen Mengen (Gew.-Teile) folgender Bestandteile werden zusammengemischt:

Harzkomponente

- Epoxidharz auf Bisphenol A-Basis (Araldit® GY 260, Ciba-Geigy)
- Butandiol-diglycidylether (Araldit® DY 026, Ciba-Geigy)
- Talk (ex Fuji Talc Co.)
- Aerosil® (ex Japan Aerosil)
- Aronix® M-8030 (ex Toa Gonsei K.K.)*
- Aronix® M-400 (ex Toa Gonsei K.K.)*

(*Aronix Verbindungen sind Acryloligomere gemäss (b)).

Härtungskomponente

- Versamid®125, Aminequivalent 330-360 (ex Henkel)
- Versamid®150, Aminequivalent 380-410 (ex Henkel)
- Diethylentriamin (DETA)
- Hycar® ATBN, Aminequivalent 900 (ex Goodrich)
- Aerosil® (ex Japan Aerosil)
- Talk (ex Fuji Talc Co.)

Die Harzkomponente und Härtungskomponente wurden bei Raumtemperatur in einem Kessel unter Vacuum zu einem homogenen Gemisch vermischt. Folgende Tests wurden durchgeführt:

Gel-Zeit: 0,5 der oben beschriebenen Komponenten wurden auf eine 80°C heisse Stahlplatte gebracht und unter ständigem Rühren die Zeit bis zur Gelierung gemessen.

Abreisstest: Die Testmassen wurden in einer Dicke von 200 µm auf eine Seite von zwei Stahlplättchen (150 x 70 x 0,8 mm) aufgetragen, wobei ein Teil der Plättchen unbeschichtet bleibt, und bei 140°C für 60 min. zusammengepresst. Die Abreisskraft wurde gemäss JIS K 6854 (1977) gemessen.

ISO-Abreisstest: Analoge aber ganz beschichtete Stahlplättchen wurden dem ISO-Abreisstest unterzogen (ISO 4578) [floating roller method].

Schlagzähigkeit gemäss Du Pont: ein wie oben beschriebenes Stahlplättchen wurde bei 140°C während 60 min. gehärtet. Im Test wird ein Gewicht von 1 kg aus einer Höhe von 50 cm auf die überzogenen Plättchen fallen gelassen. Der Zustand des Ueberzugs wird danach visuell beurteilt.

Hitzebeständigkeit/Scherfestigkeit

Harz- und Härtungskomponente wurden separat auf zwei oben beschriebene Stahlplättchen gebracht, wobei ein Teil der Plättchen unbeschichtet bleibt, und die beiden je 200 µm dicken Schichten während 60 min. bei 140°C zusammengepresst.

Die Scherfestigkeit wurde bei 80°C gemessen.

Wasserbeständigkeit/Scherfestigkeit

Gleiche Proben wie sie im Hitzebeständigkeitstest verwendet wurden. Diese wurden für 10 min. in Wasser (40°C) gelegt und anschliessend die Scherfestigkeit bei Raumtemperatur gemessen.

| | | Beispiel 1 (Teil) | Beispiel 2 (Teile) | Beispiel 3 (Teile) |
|---|---|---|---|---|
| Harz-komponente | GY 260 | 65 | 65 | 65 |
| | DYO 26 | 5 | 5 | 5 |
| | Aronix M-8030 | 5 | 10 | - |
| | Aronix M-400 | - | - | 10 |
| | Talk | 20 | 20 | 20 |
| | Aerosil | 5 | 5 | 5 |
| Härtungs-komponente | Versamide 125 | 50 | 50 | 10 |
| | Versamide 150 | - | - | - |
| | DETA | 10 | 10 | - |
| | ATBN | 30 | 30 | 65 |
| | Talc | 25 | 25 | 20 |
| | Aerosil | 5 | 5 | 5 |
| Gelzeit (80°C) (' = min, " = sec.) | | 3'40" | 2'15" | 1'15" |
| Abreisstest ($kg/cm^2$) | | 12.5 | 12.5 | 16 |
| ISO Abreisstest | | 14 | 15 | 20 |
| Schlagzähigkeit | | + | + | + |
| Hitzebeständigkeit (180°C, $kg/cm^2$) | | 28 | 32 | 44 |
| Wasserbeständigkeit (40°C, $kg/cm^2$) | | 165 | 172 | 187 |

+ bedeutet: keine Veränderung

## Patentansprüche

1. Epoxidharz-Zusammensetzung enthaltend

(a) 100 Gew.-Teile eines Epoxidharzes,
(b) 1 - 20 Gew.-Teile eines Acryloligomers,
(c) 5 - 150 Gew.-Teile eines Amins und
(d) 10 - 200 Gew.-Teile eines aminterminierten Nitrilkautschuks.

2. Zusammensetzung gemäss Anspruch 1, wobei die Summe der Komponenten (c) und (d) 50 bis 230 Gew.-Teile beträgt.

3. Zusammensetzung gemäss Anspruch 1, wobei das Gewichtsverhältnis der Komponenten (c) zu (d) 3:1 bis 1:7 beträgt.

FO 7.3 HPS/cs*